# EUROPEAN PATENT SPECIFICATION

(11) **EP 0 410 608 B1**
(45) Date of publication and mention of the grant of the patent: **06.03.1996**
(21) Application number: 90307630.5
(22) Date of filing: 12.07.1990
(51) Int. Cl.: H04N 1/393

(54) **Image data inputting systems for image processing apparatus**
Bilddateneingangssysteme für Bildverarbeitungsvorrichtungen
Systèmes d'entrée de données d'image pour appareils de traitement d'image

(30) Priority: 24.07.1989 JP 188833/89
(43) Date of publication of application: 30.01.1991
(73) Proprietor: SONY CORPORATION, Tokyo 141 (JP)
(72) Inventor: Hashimoto, Yasuhiro, c/o Patents Div. Sony Corp., Tokyo 141 (JP); Sakura, Kohei, c/o Patents Div. Sony Corp., Tokyo 141 (JP)
(74) Representative: Thomas, Christopher Hugo

(56) References cited:
- EP-A- 0 452 759
- GB-A- 2 078 411
- US-A- 3 819 854
- US-A- 4 041 466
- US-A- 4 041 466

## Description

This invention relates to image data inputting systems for image processing apparatus.

Development of still print image processing apparatus is currently in progress, wherein a still image video signal of one frame from a video source such as a television camera, video disc or still camera is inputted to an image processor, which processes the input image signal to generate a desired printable image signal which is supplied to a printing means to be printed.

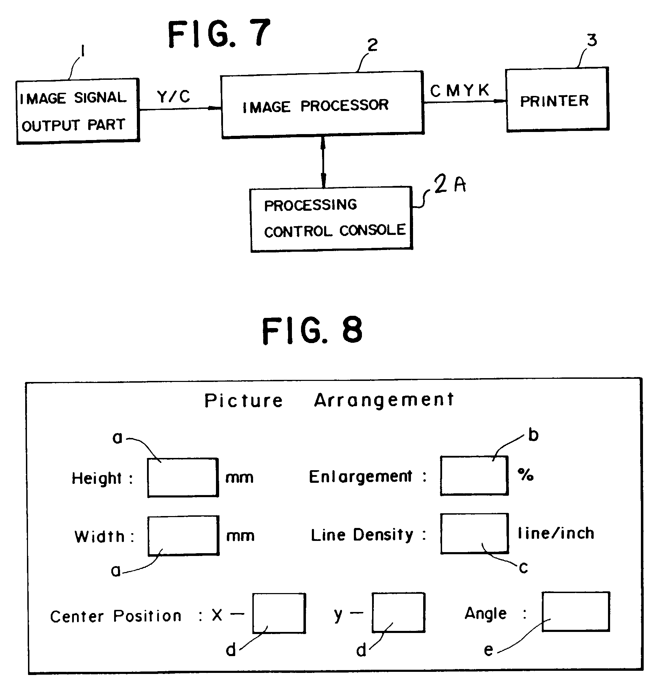

Figure 7 is a block diagram of an image processing apparatus comprising an image signal output part 1 for outputting a video signal (still image) of one frame from the video signals obtained from a television camera or the like. The still image signal in the form of, for example, a luminance (Y) signal and a colour difference (C) signal is fed to an image processor 2 where it is processed in accordance with controls from a processing control console 2A. The processing includes noise reduction, luminance or chrominance control, image conversion (enlargement, reduction, rotation, image size change and so forth), and correction of Y and C signals.

A printer 3 is supplied with the output signal of the image processor 2 converted to print signals of, for example, four colours C, M, Y and K (cyan, magenta, yellow and black) after completion of the image processing stages, whereby the operation of printing one colour image is executed.

When the above-described image conversion is performed, a picture arrangement is visually represented, as illustrated in Figure 8, on a control display of the processing control console 2A for setting and inputting a print image size (a), an enlargement percentage (b), a scanning line density (c), a picture centre position (d), and a rotation angle (e). The specified image conversion is then performed in the image processor 2 in accordance with a desired process value inputted by an operator.

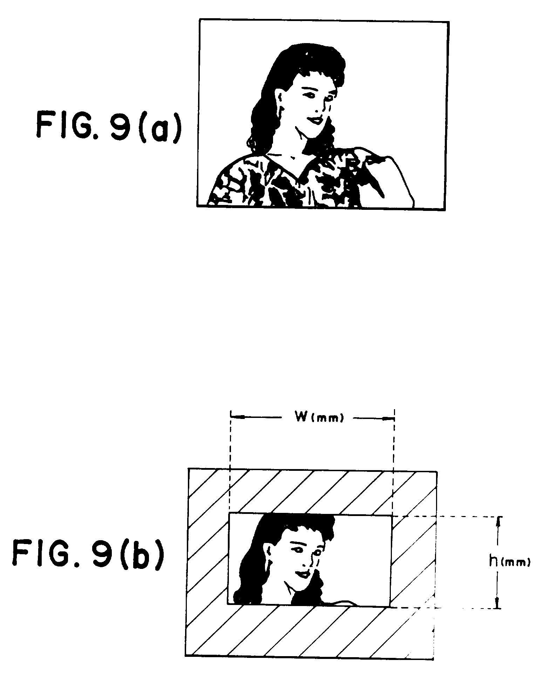

For example, when a print image size is specified with respect to the image signal of Figure 9(a) (by inputting numerical values to a), a height process value h (mm) and a width process value w (mm) are inputted. Then an operation is performed for changing the image size to hxw, as illustrated in Figure 9(b), that is, for converting the image signal, which is inputted in an oblique-line area, to a margin signal (Y and C signal at white level or a no-signal state). In addition to such image size conversion, there are also performed other operations for enlargement, rotation and so forth, whereby the inputted original image signal can be converted to a desired image suitable to be printed.

In the above image size conversion, it is customary that the numerical values are inputted in millimetres (mm) as illustrated in Figures 8 and 9.

However, dimensional units generally used for an image size in the printing industry points and picas, in addition to millimetres. Also, in some countries inches are used. Such dimensional have the relationship of 1 (inch) = 25.4 (mm) = 6 (picas) = 72 (points).

Accordingly, in execution of such image processing operation, there frequently occur occasions where the print image size is specified by the use of some other dimensional unit than millimetres. Consequently, there is the disadvantage that the operator needs to convert the value to millimetres each time before inputting a process numerical value, and errors may occur in the numerical conversion.

UK Patent Application Publication No. GB-A-2 078 411 discloses an image data inputting system according to the pre-characterising part of claim 1 hereof.

According to the present invention there is provided an image data inputting system for an image processing apparatus with image signal processing means capable of executing predetermined image conversion of an input image signal in accordance with an inputted process value preset for image size conversion and outputting the processed signal as a print image signal to printing means, said system being characterised in that it comprises:
input means for inputting a process value corresponding to one dimensional unit selected from a plurality of predetermined dimensional units, said process value defining a printing size;
detection means for detecting said selected unit when said process value is inputted thereto from said input means;
conversion means for converting said inputted process value to numerical values corresponding to the units among said plurality of predetermined units other than said selected unit detected by said detection means;
input processing means for converting the inputted image signal to a desired image signal in accordance with said numerical values converted by said conversion means; and
printing means for printing at said printing size said desired image signal obtained from said input processing means.

In an embodiment of the invention described hereinbelow, regardless of the dimensional unit selected at the time of inputting the process value, a numerical process value corresponding to a predetermined dimensional unit for use in the image signal processing operation can be supplied to the image signal processing means. Furthermore, numerical values so converted as to correspond to the individual units can be visually represented on image display means together with the inputted process value.

The invention will now be described by way of example with reference to the accompanying drawings, throughout which like parts are referred to by like references. and in which:
Figure 1 is a block diagram of a print image processing apparatus which employs an image data inputting system according to the present invention;
Figure 2 is a block diagram of an image processor;
Figure 3 is a flow chart of operation of the image processor;
Figure 4 is a function block diagram showing a preferred embodiment of image data inputting system according to the present invention;
Figure 5 illustrates an input picture arrangement which can be used in the image data inputting system;
Figure 6 is a flow chart of operation of the embodiment;
Figure 7 is an explanatory diagram of an image processing apparatus;
Figure 8 illustrates an input picture arrangement displayed at the time of image conversion; and
Figure 9 (a) and (b) illustrate how an image size conversion is carried out.

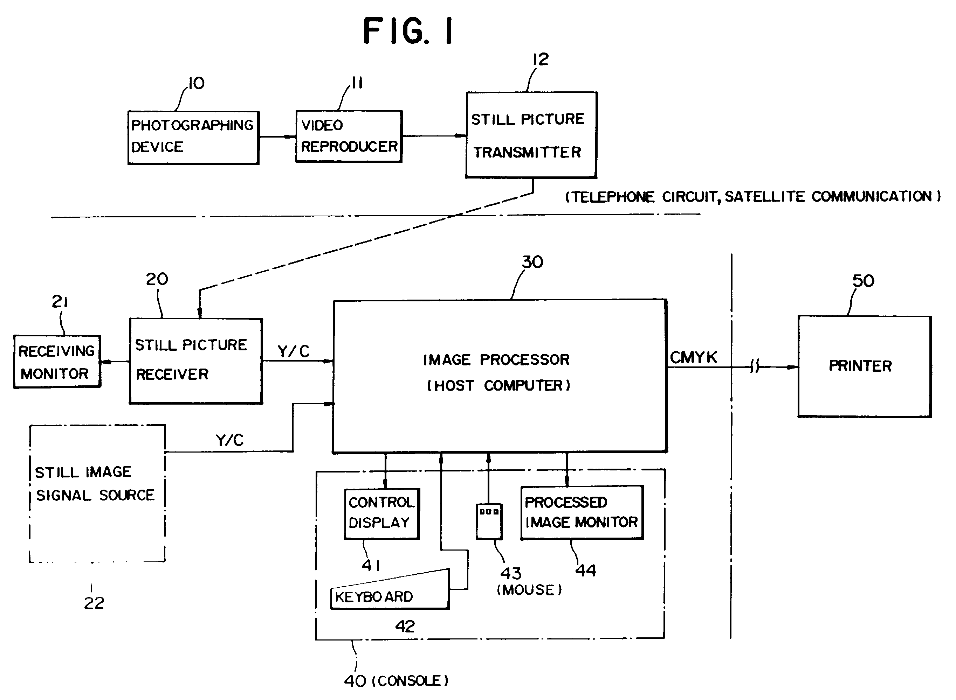

The image processing apparatus of Figure 1 uses an image data inputting system according to the present invention, and it is so formed that an image signal transmitted by phototelegraphy can be processed and printed, for example, as a photograph on newspaper. First a description will be given of the image processing apparatus. There are shown in Figure 1 a photographing device 10 such as a television camera; a video reproducer 11 (TV monitor) for reproducing the video image picked up by the photographing device 10; and a still picture transmitter 12 capable of transmitting, via a telephone circuit, a communications satellite or the like, a desired picture (colour video signal of one frame) out of the entire picked-up video images.

Also shown are a still picture receiver 20 for receiving the picture from the still picture transmitter 12; and a receiving monitor 21 for displaying the received picture. The still image signal received by the picture receiver 20 is composed of a luminance signal (Y signal) and a colour difference signal (C (R - Y, B - Y) signal) of one frame, and is supplied either automatically or by manual operation to an image processor 30. A video output device such as a video disc unit, video tape recorder, television receiver or the like may also be used as a still image signal source 22.

As will be described in detail later, the image processor 30 performs various operations for the image signal supplied thereto, such as storing the image signal, processing the image, and outputting it as a print image signal.

A console 40 comprises a control display 41, a keyboard 42, a mouse 43 and a processed image monitor 44. The console 40 is manipulated by an operator to execute various operations of the image processor 30.

A printer 50 is supplied with the print image data processed by the image processor 30 and converted to print colour signals of, for example, Y, M, C and K (yellow, magenta, cyan and black), and prints the desired image.

Due to the constitution of the apparatus described above, an image obtained by picking up, for example, a news scene is phototelegraphed directly by the still picture transmitter 12 and is then processed to be ready for printing, whereby the image signal to be printed is supplied to the printer 50. Thus, the above apparatus can be used for an editing system or the like in, for example, a newspaper office.

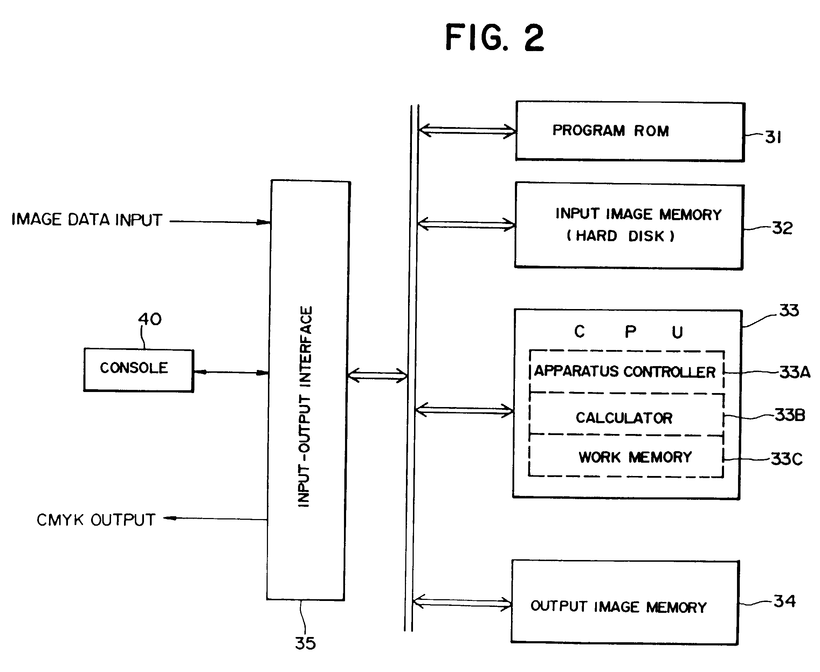

In the image processing apparatus shown in Figure 1, the image processor 30 is as shown in Figure 2 and serves as a host computer in the entire apparatus. That is, the image processor 30 comprises a program ROM 31 where various control programs are stored; an input image memory (hard disc) 32 where image data inputted from an image source such as the still picture receiver 20 are sequentially stored; a CPU (central processing unit) 33 serving as a controller; an output image memory 34 for storing an output image signal converted to individual colour signals C, M, Y and K (cyan, magenta, yellow and black) after being processed for printing; and an input-output interface 35 for transferring the image data to or from the console 40.

The CPU 33 comprises an apparatus controller 33A for controlling the operations of the component elements in accordance with an operation program, a calculator 33B for executing various calculations, and a work memory (main storage device) 33C.

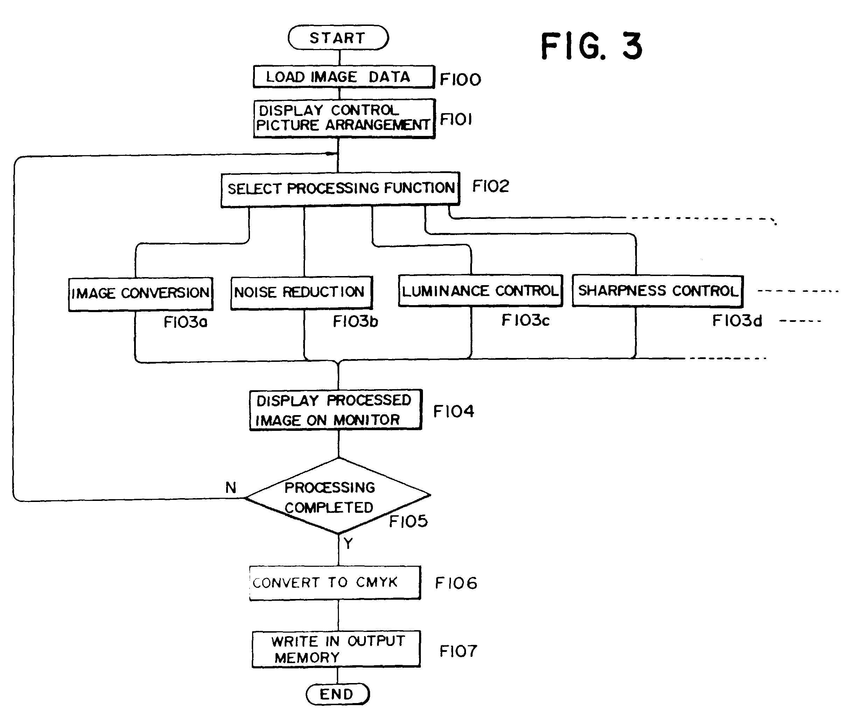

Normally the still image signal inputted to the image processor 30 is automatically stored in the input image memory (hard disc) 32 simultaneously with reception of the signal. Then the image data are read out from the input image memory 3 in accordance with requirements, and the image processing routines as shown in the flow chart of Figure 3 are executed, principally by the CPU 33.

In the image processing procedure, first the image data to be processed are loaded from the input image memory 32 into the CPU 33 (F100), and the control picture representing the contents to be processed are visually represented in the form of, for example, a menu on the control display 41 of the console 40 (F101).

The content to be processed is determined (F102) in response to the input from the keyboard 42 or the mouse 43 selected by the operator, and then the required processing routine is executed. That is, there is executed on function selected out of image conversion, noise reduction, chrominance control and so forth denoted by F103, F103b, F103c .... respectively. As for the image conversion in F103a, any of enlargement/reduction, centre position change, rotation, image size change and so forth can be executed with respect to the inputted original image. Although the functions F103a, F103b, F103c .... are shown in parallel in the flow chart, such functions may be executed sequentially in a predetermined order.

The image signal processed in F103 is supplied to the image monitor 44, and is then displayed (F104) so that the operator can confirm the present stage in the processing procedure. When another function is to be executed, the operator manipulates the console 40 to select the desired processing routine again (F105 to F102).

In the stage after completion of the entire image processing operations, the image signal composed of luminance (Y) and colour difference (C) signals is converted to C, M, Y and K colour signals for printing (F106), and then such signals are stored as output data in the output image memory 34 (F107). Subsequently, the data thus stored are supplied to the printer 50 from the memory 34 either automatically or by manipulation of the console 40, whereby one image is printed with the image signals of four colours C, M, Y and K.

The image processing apparatus shown in Figure 1 is equipped with the image processor 30 to perform the above operations, so that a desired image can be printed on the basis of the image data (composed of the luminance and colour difference signals).

Now a description will be given of the image data inputting system for the above print image processing apparatus.

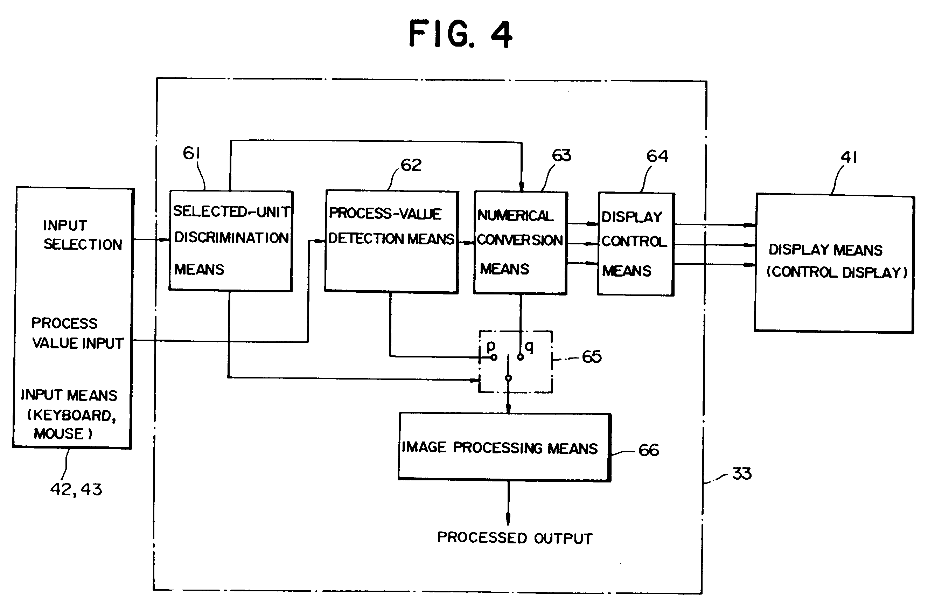

The image data inputting system is useful for executing the image conversion (denoted by F103a) in the flow chart of Figure 3. Figure 4 shows a function block diagram thereof.

Enclosed with a one-dot chain line is a function block formed by software means in the CPU 33. Means for inputting a numerical value (process value) for image conversion in the CPU 33 is represented by the keyboard 42 and the mouse 43. Display means is represented here by the control display 41.

There are also shown selected-unit discrimination means 61 for detecting the unit of the input numerical value selected by the mouse 43 or the like; process value detection means 62 for detecting the inputted process value; numerical conversion means 63 for executing calculations on the basis of the inputted process value and its unit and converting such process value to different numerical values corresponding to other units; display control means 64 for visually representing, on the control display 41, numerical data converted to the numerical values corresponding to individual units; switch means 65 selectively switchable in accordance with the unit discriminated by the selected-unit discrimination means 61; and image processing means 66 capable of performing the various image processing operations shown in the flow chart of Figure 3. The calculation for changing the picture size can be executed on the basis of the process value inputted as a numerical value which corresponds to a unit of, for example, millimetres.

Due to the above function block constituted in the CPU 33, it is possible to realize the following operations in this embodiment.

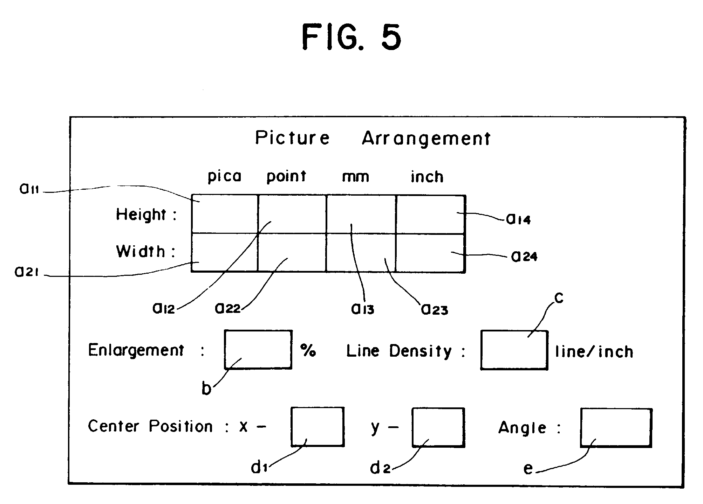

First, in execution of the image conversion denoted by F103a in Figure 3, the process-value input picture arrangement of Figure 5 for example is visually represented on the control display 41, and then the operator performs the same input operation as that for the input picture arrangement of Figure 8 described already. As the numerical value input portion a for setting the picture size as explained previously in connection with Figure 9, there are provided input portions (a₁₁ to a₁₄, a₂₁ to a₂₄) relative to four dimensional units (picas, points, millimetres and inches) for each of the height and the width.

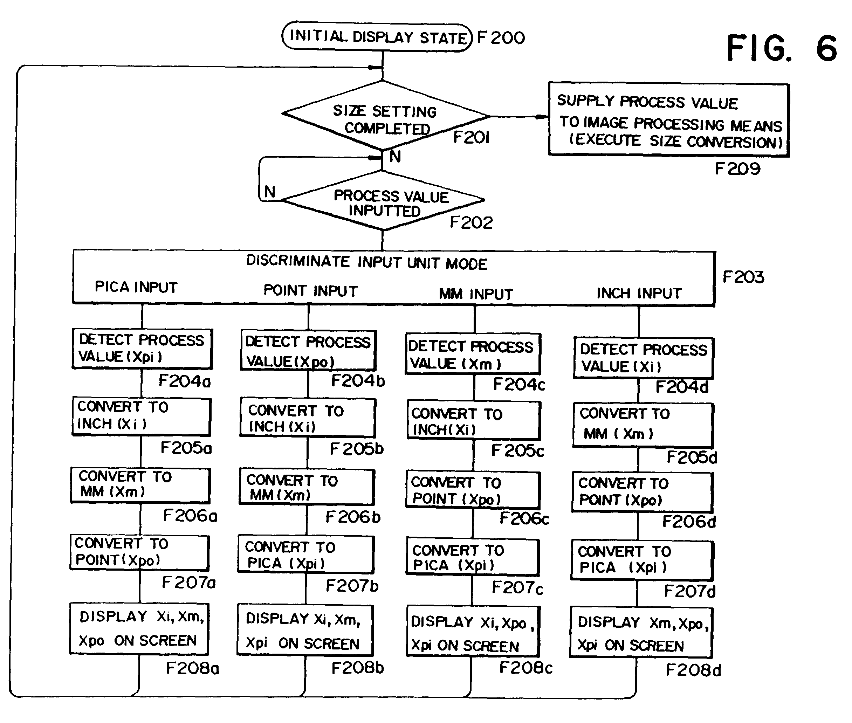

Regarding such input picture arrangement where the picture size is to be set, the operator may select a desired dimensional unit with respect to both the height and the width, and may supply the numerical values based on the selected unit. Then, in the function blocks of Figure 4, there are performed, in response to the input thus entered by the operator, the operations shown in the flow chart of Figure 6.

In the beginning, the input picture of Figure 5 is displayed. When a certain numerical value is inputted for setting a picture size (F200 to F202), the selected-unit discrimination means 61 serves to discriminate the unit to which the inputted numerical data corresponds (F203). Such discrimination is rendered possible by detecting, for example, the input position (a₁₁ to a₁₄ and a₂₁ to a₂₄).

Upon detection of the fact that the height data has been supplied with, for example, the unit of picas, (for example, a process value Xpi has been inputted to a position a₁₁), the process value Xpi from the process-value detection means 62 is supplied to the numerical conversion means 63 (F204a), where the process value Xpi is converted to numerical values (Xi, Xm, Xpo) corresponding to the individual dimensional units of inches, millimetres and points respectively (F205a to F207a). Although such numerical conversion can be performed with facility by the provision of a multiplier, it may also be achieved by preparing ROM data such as a conversion table.

Thus the numerical conversion means 63 produces numerical values (Xpo, Xm, Xi) of the individual dimensional units from the process value Xpi based on the inputted unit of picas, and then such converted numerical values are fed to the display control means 64, so that the numerical values are displayed respectively in the portions a₁₂, a₁₃, a₁₄ on the input picture arrangement of Figure 5 in the control display 41 (F208a). For example, when Xpi = 12, numerical values "12", "144", "50.8" and "2" are displayed in the portions a₁₂ to a₁₄ respectively.

If the dimensional unit detected in F203 is points, millimetres or inches, such detected unit is converted to numerical values corresponding to other units similarly to the foregoing case of picas, and such numerical values are then displayed respectively (points in F204b to F208b; millimetres in F204c to F208c; inches in F204d to F208d).

Upon completion of inputting the picture size setting data, the inputted process value is supplied to the image processing means 66. In this embodiment where the image processing calculation is executed on the basis of the numerical value based on the dimensional unit of millimetre, the switch means 65 engages a p-contact merely when the input is based on millimetres, and the inputted process value is supplied directly to the image processing means 66 without any conversion. However, if the inputted process value is based on some other dimensional unit, the q-contact of the switch means 65 is engaged, and the numerical value converted to millimetres by the numerical conversion means 63 is supplied (F209). For example, when numerical values "100" and "200" are supplied as process values to the portions a₁₃, a₂₃, then such values "100" and "200" are supplied directly as the data representing the height and the width respectively. Meanwhile, when numerical values "2" and "3" are supplied to the portions a₁₂ and a₂₂ respectively, numerical values "50.8" and "76.2" obtained by millimetre-to-inch conversion are supplied to the image processing means.

After the process data (representing the height and width of the picture) have been supplied to the image processing means 66, image size conversion of the original image signal is executed on the basis of such numerical values, and the size-converted image such as shown in Figure 9 (b) is displayed on the processed image monitor 44 in the console 44. Thus, the processing procedure is carried out in succession from F104 in the flow chart of Figure 3.

With this embodiment of the image data inputting system, as described, one dimensional unit selected and inputted as a process value is converted to corresponding numerical values of other dimensional units, which are then displayed together with the inputted process value. If there is supplied any numerical value of one dimensional unit other than a predetermined unit (for example), millimetres) preset as a unit at the time of calculation for image conversion, such numerical value is converted to a different value based on the predetermined dimensional unit and is then outputted to the image processing means 66. Therefore, even when the operator is requested to process the print image size on the basis of a numerical value corresponding to points for example, it is not necessary for him to execute a conversion of points to millimetres each time before supplying the process value, hence facilitating the processing operation.

In the image data inputting system which is thus capable of selecting a desired one of prepared dimensional units and inputting a numerical value of such selected unit, application thereof is possible not merely to the image size conversion but also to execution of various other processing operations.

As described above, with the image data inputting system for a print image processing apparatus, one of a plurality of prepared dimensional units is selected and a numerical process value based on such selected dimensional unit can be inputted. Therefore, it is not necessary for an operator to perform a numerical conversion of the dimensional unit at the time of inputting the process value, hence enhancing the operational efficiency. Moreover, erroneous input that may result from calculation error at the time of such numerical conversion is eliminated.

## Claims

1. An image data inputting system for an image processing apparatus with image signal processing means (30) capable of executing predetermined image conversion of an input image signal in accordance with an inputted process value preset for image size conversion and outputting the processed signal as a print image signal to printing means (50), said system being characterised in that it comprises:
input means (42, 43) for inputting a process value corresponding to one dimensional unit selected from a plurality of predetermined dimensional units, said process value defining a printing size;
detection means (33, 62) for detecting said selected unit when said process value is inputted thereto from said input means (42, 43);
conversion means (33, 63) for converting said inputted process value to numerical values corresponding to the units among said plurality of predetermined units other than said selected unit detected by said detection means (33, 62);
input processing means (33, 66) for converting the inputted image signal to a desired image signal in accordance with said numerical values converted by said conversion means (33, 63); and
printing means (50) for printing at said printing size said desired image signal obtained from said input processing means (33, 63).

2. A system according to claim 1 wherein display means (33, 64) is provided for monitoring said process value inputted thereto from said input means (42, 43) and also said numerical values obtained from said conversion means (33, 63).

3. A system according to claim 1 or claim 2 wherein said inputted image signal is transmitted through a communication circuit.

4. A system according to claim 1, claim 2 or claim 3 wherein said printing means (50) is used for printing said image signal on newspaper.

## Patentansprüche

1. Bilddateneingabesystem für eine Bildverarbeitungsvorrichtung, bei der eine Bildsignalverarbeitungseinrichtung (30) in der Lage ist, eine vorgegebene Bildumwandlung eines Eingangsbildsignals in Abhängigkeit eines eingegebenen Verarbeitungswertes durchzuführen, der für die Bildgrößenumwandlung vorher eingestellt wurde, und das verarbeitete Signal als Druckbildsignal an eine Druckeinrichtung (50) auszugeben, wobei das System gekennzeichnet ist durch:
eine Eingabeeinrichtung (42, 43), um einen Verarbeitungswert entsprechend einer Maßeinheit einzugeben, die aus mehreren vorgegebenen Maßeinheiten ausgewählt wurde, wobei dieser Verarbeitungswert eine Druckgröße bestimmt;
eine Ermittlungseinrichtung (33, 62), um die ausgewählte Einheit zu ermitteln, wenn dieser Verarbeitungswert aus der Eingabeeinrichtung (42, 43) in diese eingegeben wurde;
eine Umwandlungseinrichtung (33, 63), um den eingegebenen Verarbeitungswert in numerische Werte umzuwandeln, die den Einheiten unter den vorgegebenen Einheiten entsprechen, die sich von der ausgewählten Einheit, die durch die Ermittlungseinrichtung (33, 62) ermittelt wurde, unterscheiden;
eine Eingabeverarbeitungseinrichtung (33, 66), um das eingegebene Bildsignal in ein gewünschtes Bildsignal in Abhängigkeit von den numerischen Werten, die durch die Umwandlungseinrichtung (33, 63) umgewandelt wurden, umzuwandeln; und
eine Druckeinrichtung (50), um das gewünschte Bildsignal, das von Eingabeverarbeitungseinrichtung (33, 63) erhalten wurde, in dieser Druckgröße zu drucken.

2. System nach Anspruch 1, wobei eine Anzeigeeinrichtung (33, 64) zur Überwachung des Verarbeitungswertes vorgesehen ist, der aus der Eingabeeinrichtung (42, 43) in diese eingegeben wurde, und außerdem der numerischen Werte, die von der Umwandlungseinrichtung (33, 63) erhalten wurden.

3. System nach Anspruch 1 oder 2, wobei das eingegebene Bildsignal über eine Kommunikationsschaltung übertragen wird.

4. System nach Anspruch 1, 2 oder 3, wobei die Druckeinrichtung (50) zum Drucken des Bildsignals auf einer Zeitung verwendet wird.

## Revendications

1. Système d'entrée de données d'image pour un appareil de traitement d'images, ayant des moyens de traitement de signaux d'image (30) aptes à exécuter une conversion d'image prédéterminée d'un signal d'image d'entrée selon une valeur de traitement préétablie pour la conversion de taille de l'image, et à fournir le signal traité comme signal d'image à imprimer à des moyens d'impression (50), ledit système étant caractérisé en ce qu'il comprend:
- des moyens d'entrée (42, 43) pour introduire une valeur de traitement correspondant à une unité de mesure sélectionnée parmi une pluralité d'unités de mesures prédéterminées, ladite valeur de traitement définissant une taille d'impression;
- des moyens de détection (33, 62) pour détecter ladite unité sélectionnée lorsque ladite valeur de traitement est fournie à ceux-ci à partir desdits moyens d'entrée (42, 43);
- des moyens de conversion (33, 63) pour convertir ladite valeur de traitement en valeurs numériques correspondant aux unités de mesure parmi ladite pluralité d'unités de mesure prédéterminées, autres que ladite unité sélectionnée détectée par lesdits moyens de détection (33, 62);
- des moyens de traitement de signal d'entrée d'entrée (33, 66) pour convertir le signal d'image introduit en un signal d'image désiré selon lesdites valeurs numériques converties par lesdits moyens de conversion (33, 63); et
- des moyens d'impression (50) pour imprimer à ladite taille d'impression ledit signal d'image désiré obtenu à partir desdits moyens de traitement de signal d'entrée (33, 66).

2. Système selon la revendication 1, dans lequel des moyens d'affichage (33, 64) sont prévus pour surveiller ladite valeur de traitement fournie à ceux-ci à partir desdits moyens d'entrée (42, 43) et également des valeurs numériques obtenues à partir desdits moyens de conversion (33, 63).

3. Système selon la revendication 1 ou la revendicaition 2, dans lequel ledit signal d'image d'entrée est transmis par un circuit de télécommunications.

4. Système selon la revendication 1, 2 ou 3, dans lequel lesdits moyens d'impression (50) sont utilisés pour impprimer ledit signal d'image sur un journal.
